# EUROPEAN PATENT SPECIFICATION

(11) **EP 2 043 766 B1**
(45) Date of publication and mention of the grant of the patent: **17.02.2010**
(21) Application number: 07787544.1
(22) Date of filing: 13.07.2007
(51) Int. Cl.: B01D 63/02, B01D 65/08, C02F 1/44

(54) **CAPILLARY MEMBRANE FILTRATION MODULE**
KAPILLARMEMBRANFILTRATIONSMODUL
MODULE DE FILTRATION À MEMBRANES CAPILLAIRES

(30) Priority: 26.07.2006 EP 06117912
(43) Date of publication of application: 08.04.2009
(73) Proprietor: Vlaamse Instelling voor Technologisch Onderzoek (VITO), 2400 Mol (BE)
(72) Inventor: BECKERS, Herman, B-3271 Scherpenheuvel-Zichem (BE); DOYEN, Wim, B-2160 Wommelgem (BE)
(74) Representative: pronovem
(86) International application number: PCT/EP2007/057276
(87) International publication number: WO 2008/012221

(56) References cited:
- EP-A1- 0 931 582
- WO-A-02/22244
- JP-A- 5 220 357
- US-A- 5 639 373

## Description

### Field of the Invention

The present invention is related to outside-in capillary membrane filters for water treatment.

### State of the Art

Filters for water treatment with capillary ultra- or micro-filtration membranes having the smallest pores at its outside diameter (so called "outside-in capillary membranes") are filtering the raw water by imposing a lower pressure at the inside diameter ("lumen") side. The permeate flows from the outside diameter towards the lumen but the dirt accumulates at the outside perimeter and is removed by air scrub and/or back pulse. This requires a good contact between the air bubbles and the capillary membrane. Other points of concern are to avoid entrapment of the entrained dirt and to have a design that can be constructed in an economic way. Different module designs to cope with these requirements have been proposed already.

In US patent 5,248,424, a capillary membrane module is described that consists of a layer of membranes potted at both ends in a header that serves as a permeate collector. The membranes can move freely and form a configuration in the form of an arc above a horizontal plane through both headers. A disadvantage of this configuration is that the horizontal layer of membranes easily accumulates suspended solids.

US patent 5,783,083 describes a capillary membrane / hollow fiber membrane module where both fiber ends are potted in a header of which at least one serves as permeate collector. The fibers form a vertical cylindrical skein. The fiber length is 0,1 % to 5 % longer as the fixed distance between both headers, to allow the fibers to make a certain displacement. Rinsing is done by blowing air between the fibers. To assure that the fibers are at a well defined distance from each other in the header, the ends of the fibers are fixated on a flexible support and wound spirally before being potted in a tube. The potting of the fibers in both headers is almost identical, with the exception that in case only one header is used as permeate collector, the lumen of the fibers is only open at one end. This configuration has the risk to entrap dirt in the upper header that hinders the free passage and circulation of the air and raw water at the top of the module.

Document US 5639373 discloses an assembly comprising vertical skeins, each skein formed of multiple arrays of hollow fibre membranes. In each skein, the opposed terminal portions of the fibres are potted in separate upper and lower headers, which are spaced apart at a fixed distance. Arms of gas-distribution means are disposed between the lower headers.

To avoid entrapment of dirt patent WO 02/22244 describes a vertical skein of capillary membranes that is only potted in one header at the bottom side. The lumen side of the ends of the capillary membranes at the top side are only closed by potting material. The capillary membranes are loose so that there is no obstruction at the top to entrap dirt present from the raw water. Injection of air in the header at the bottom cleans the outer surfaces of the capillary membranes (air scrub).

The objective of EP 0931582 is to make a highly integrated hollow fiber membrane module by potting the ends of a planar layer of fibers into an aperture of a tube. At least at one side the lumen of the fiber ends remains open so that the tube serves as permeate collector. Potting is done by providing a weir at the periphery of the aperture of the collector and filling the weir with a potting material, for instance polyurethane. Each layer is potted in a separate header.

Several of the module designs discussed above have a planar layer of capillary membranes or hollow fibers, who are normally made in a continuous process. EP 0931582 describes a technique to produce such a layer by making a knitted fabric of hollow fibers. In US 5,716,689, the membranes are put side by side and an adhesive strip is pushed on the membranes on a fixed distance. Then the membranes are cut adjacent to these strips and these strips are assembled into a hollow fiber carpet by bringing the strips at each end of the membrane together to form a loop of hollow fibers.

### Aims of the Invention

The present invention aims to provide a novel filtration module design based on planar vertical layers of capillary membranes that can be cleaned easily by air scrub and that is less susceptible to entrapment of dirt.

### Summary of the Invention

The present invention concerns a filtration device for removing particles from a liquid as set out in the preamble of claim 1. Said filtration device comprises a collector header arranged to collect and remove permeate and a plurality of planar membrane assemblies having an upper side and a lower side. Said lower side is operatively linked to said collector header. Said planar membrane assemblies each comprise a plurality of outside-in micro- or ultrafiltration capillary membranes, each capillary membrane extending from said lower side to said upper side of said planar membrane assembly. Said plurality of capillary membranes form a plane. According to the invention, the capillary membranes of each planar membrane assembly are (operatively) linked to an individual upper header. The upper headers of each planar membrane assembly and the disposition of the planar membrane assemblies at the lower side are arranged to allow a flow of air bubbles, crude water and particles to pass from said lower side to said upper side. The filtration device of the invention reduces particle build-up at said upper side.

The capillary membranes of a planar membrane assembly are arranged side by side. As a result, the plurality of capillary membranes forming a plane means that the capillary membranes of a planar membrane assembly form a single row. Hence, the capillary membranes of a planar membrane assembly are arranged in a single row. Each planar membrane assembly hence consists of a single row of capillary membranes.

According to the invention, the collector header is formed of a single collector chamber. The capillary membranes of said plurality of planar membrane assemblies are linked together at the lower side to said collector header (linked to said collector chamber).

The filtration device comprises an individual upper header for each planar membrane assembly. Hence, all single rows of capillary membranes (all planar membrane assemblies) are linked together to the collector header at the lower side, but each single row of capillary membrane (each planar membrane assembly) is linked to an individual upper header. The capillary membranes of a planar membrane assembly are linked at the upper side to an individual upper header. The planar membrane assemblies may be linked to the corresponding upper header either operatively or purely mechanically.

In a particular embodiment, the capillary membranes are closed at the upper side of the planar membrane assembly. In an alternative embodiment, the capillary membranes are kept open at the upper side and each upper header is arranged to collect and remove permeate.

In a specific embodiment of the present invention, the filtration device comprises an air supply arranged to provide air bubbles between the planar membrane assemblies. The air supply is preferably arranged over the complete length thereof. The air supply is integrated with or placed just above the collector header. The air supply is preferably provided between all planar membrane assemblies.

Preferably, in the filtration device according to the present invention, the upper headers of each planar membrane assembly are fixed at a predetermined distance from each other.

The capillary membranes can have an outer diameter between 0,4 and 5 mm. The filtration device according to the invention preferably comprises between 2 and 50, preferably between 2 and 20, and advantageously between 3 and 8 planar membrane assemblies.

### Brief Description of the Drawings

Figure 1 shows a side view of a filtration membrane module according to the present invention. Figure 2 shows a front view of the same module.

Figure 3 schematically shows a front view of an apparatus to manufacture a planar layer of capillary membranes. A side view of the same apparatus can be found on figure 4

### Detailed Description of the Invention

Capillary membranes suitable for carrying out the invention are disclosed in W02006/053406. The invention is however not limited to the use of these specific capillary membranes.

The capillary membranes are hanging side by side to form a planar vertical layer. As a result, a planar vertical layer comprises capillary membranes arranged in a single row. In the present invention, each single row of capillary membranes is to be regarded as a planar membrane assembly.

At one side - the bottom side - several such planar layers are potted together in one header, parallel to each other. The membrane ends remain open here so that the permeate is collected and evacuated from the membranes of all layers together. At the other side - the top side - each planar layer (each single row) of capillary membranes has an individual upper header. Here the header may also act as a collector or the ends may be closed. The gap that remains between two adjacent upper headers allows the raw water and the air bubbles to pass easily.

The present invention relates to a submerged filtration module made out of outside-in capillary membranes. Filtration is done by imposing a lower pressure to the lumen side of the capillary membranes.

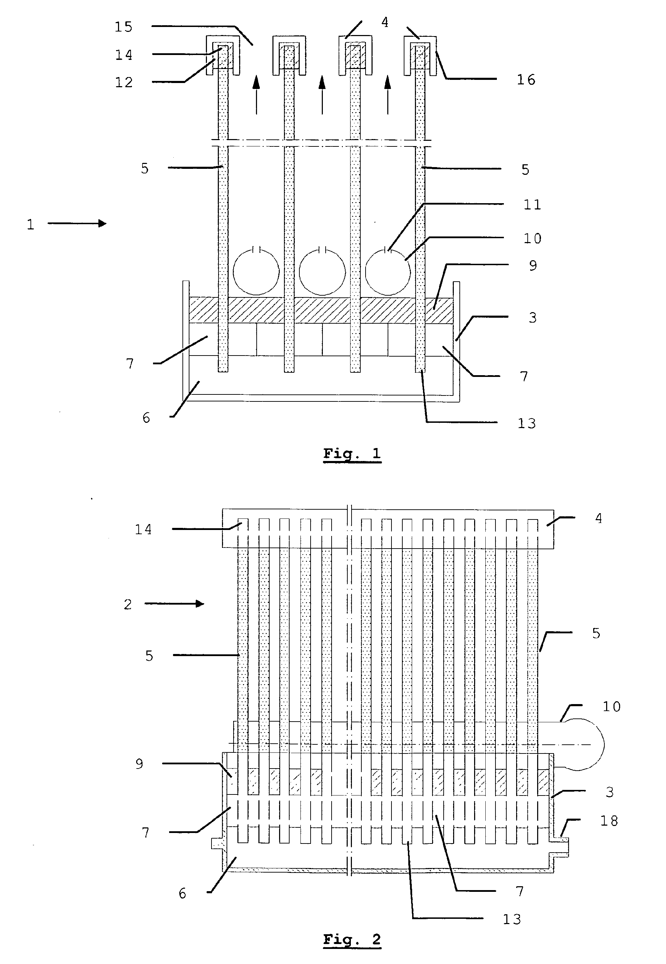

The functioning is best explained by means of the drawings. On figure 1 a side view of the module (1) is shown. The membranes (5) are hanging vertically and are potted at the bottom side in a header (3) that acts as a permeate collector. The membranes (5) are placed in a single row (a plane) to form a planar layer (2). On figure 1 four such planar layers (2) are shown in side view. Such a planar layer can be better seen on figure 2. The membranes in a planar layer are positioned side by side with a small gap between two adjacent capillary membranes. The number of membranes in one plane can vary from only a few to more than thousand, depending on the diameter of the membrane, the distance between two adjacent membranes and the length of the planar layer. The number of planar layers can vary from 2 to 50. At the bottom collector the membrane ends (13) are open. The filtered water (permeate) that is sucked through the membrane wall flows through this open lower end (13) into a collector chamber (6). In the collector (3) an opening (18) is made at one or two sides to evacuate the permeate. At the place where membranes (5) are entering the collector sealing is done by potting material (9), for instance a poly-urethane, epoxy, polybutadiene resin or similar material. The function of supports (7) is to hold the capillary membranes together during production and to prevent potting resin entering the permeate collector (6) during the potting operation.

An essential novelty of the invention presented here is that at the upper end of the capillary membranes the different planar layers of membranes are potted in individual headers (4). The capillary membrane upper ends (14) can be closed by potting material (12) as shown on figures 1 and 2, but can also be left open to evacuate permeate also at the upper side. The gaps (15) left between the different headers (4) and between the header outer housings (16) of two adjacent collectors (1) make it possible for particles that are floating in the raw water to be circulated by the upward water flow. Most existing module designs have larger areas at the top where the flows of raw water and air bubbles are insufficient with as consequence larger particles being entrapped. Patent WO 02/22244 has also openings at the top side between the capillary membranes but here the membranes are loose over their entire length so that there is a high risk on entanglement, resulting also in poor accessibility for the cleaning action of air bubbles and the raw flowing water. In the novel design presented here, the upper headers are mounted at a fixed distance e.g. by mounting them in the main module frame structure at a well defined distance from each other. As a result, there is a well defined distance between two adjacent planar layers. This keeps the individual capillary membranes well apart from each other in a fixed and controllable way resulting in an excellent accessibility to the air bubbles and the raw water without risk on entanglement.

In a typical application as membrane bioreactors (MBR), course air bubbling is applied to keep the raw water, outside the capillaries, moving and to prevent that particles sink to the bottom of the membrane bioreactor tank. This air is blown below the modules and cleans the outer surface of the capillary membranes by scrubbing effect. Optionally additional air can be supplied by blowing air through openings (11) of an air supply tube (10) placed between the planar layers of capillaries just above the lower collector (3). The number of air supply tubes placed can vary from zero to one between every planar layer as shown on figure 1.

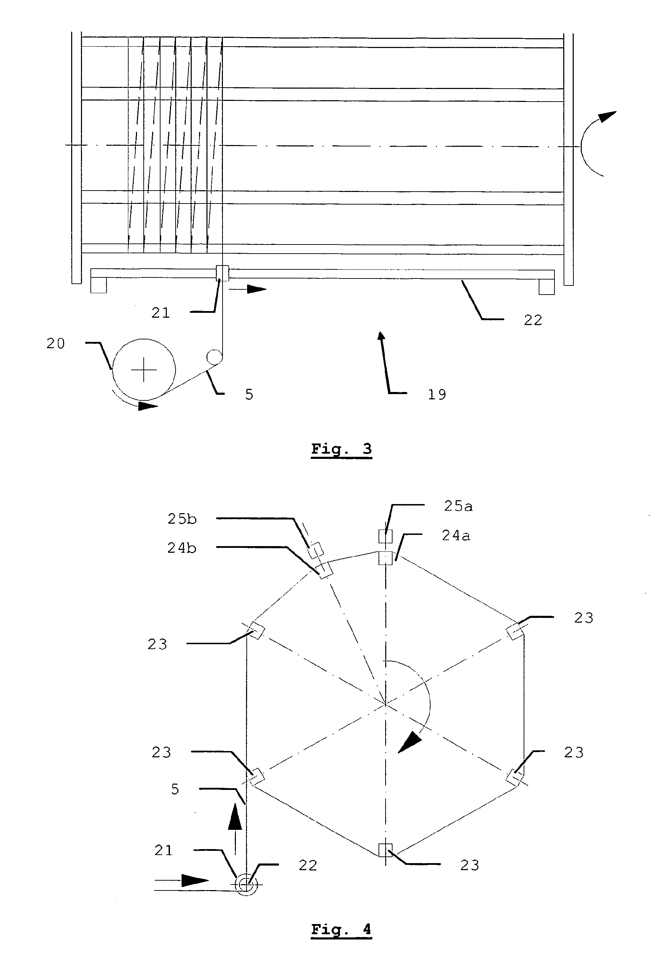

The novel collector design presented here comprises different planar layers of capillary membranes. A method to make such planar layers in a cheap way is presented in what follows. A machine to make this is schematically represented in figures 3 and 4. A reel (20) with the capillary membrane (5) wound on it is placed on the planar layer production machine (19). One end of the membrane (5) is fixed to bar (24 a) or (24 b) and machine (19) starts to rotate. The membrane (5) is wound cylindrically around a number of bars (23) and (24). During each rotation the membrane guide (21) moves a fixed distance away along a guiding bar (22) so that the membrane (5) is laid on the bars (23) and (24) in a very precise and controllable way. At the end when guide (21) reaches its final position the machine stops and the other end of the membrane coming from the reel (20) is fixed to one of the bars (24a or b) and cut. Then a support (25a) respectively (25b) with adhesive on it is pushed on bars (24a) and (24b). This support is for instance a part of a plate made of polyvinylchloride (PVC), acrylonitril butadiene styrene (ABS), polyethylene (PE), polypropylene (PP) or a similar material. The adhesive is preferably an adhesive that reacts quickly enough to allow short operation times but not too quickly to allow enough time for the operator to do the gluing. Suitable adhesives can be but is not limited to polyurethane, epoxy or polybutadiene resin, hot melt glue, or glue. An advantage of an adhesive such mentioned above (e.g. a hot melt) that can be applied in thicknesses of up to a few millimeter, is that the openings between the capillary membranes (5) and the supports (25a) and (25b) can be closed when pushing these supports with hot melt on it on bars (24a) and (24b). To avoid sticking of the hot melt to the bars (24a) or (24b) that are part of the apparatus structure, an anti-sticking layer can be put on these bars or a support similar to supports (25a) and (25b) can be put on the bars (24a) and (24b) before start. These additional supports become then also part of the collector (3) and are shown on figures 1 and 2 as item (7). When the adhesive is strong enough (e.g. for a hot melt when it has cooled down enough), the membranes (5) are cut between bars (24a) and (24b) and the planar layer capillary membranes can be removed and are ready to be used in the module production. According to the same principle an apparatus with a cylinder instead of several bars (23) and (24) can be used.

## Claims

1. A filtration device (1) for removing particles from a liquid, said filtration device comprising:
- a collector header (3) arranged to collect and remove permeate,
- a plurality of planar membrane assemblies (2) having an upper side (14) and a lower side (13), said lower side being operatively linked to said collector header (3), said planar membrane assemblies (2) each formed of a single row of a plurality of outside-in micro- or ultrafiltration capillary membranes (5), each capillary membrane extending from said lower side (13) to said upper side (14) of said planar membrane assembly (2),
**characterised in that** said collector header (3) is formed of a single collector chamber (6) and **in that** the filtration device (1) comprises an individual upper header (4) for each planar membrane assembly (2), wherein the upper sides (14) of the capillary membranes of said planar membrane assembly are linked to said individual upper header (4), and wherein the upper headers (4) of each planar membrane assembly (2) and the disposition of the planar membrane assemblies at the lower side are arranged to allow a flow of air bubbles, crude water and particles to pass from said lower side to said upper side.

2. Filtration device according to claim 1 wherein each upper header (4) is arranged to collect and remove permeate.

3. Filtration device according to claim 1 wherein the capillary membranes (5) are closed at the upper side (14) of the planar membrane assembly.

4. Filtration device according to claim 1, 2 or 3 comprising an air supply (10, 11) arranged to provide air bubbles between the planar membrane assemblies (2).

5. Filtration device according to claim 4, wherein the air supply (10, 11) is arranged over the complete length of the planar membrane assemblies (2).

6. Filtration device according to claim 4 or 5, wherein said air supply (10, 11) is integrated with or placed just above the collector header (3).

7. Filtration device according to claim 4, 5 or 6, wherein an air supply (10, 11) is provided between all planar membrane assemblies (2).

8. Filtration device according to any one of the preceding claims, wherein the upper headers (4) of each planar membrane assembly (2) are fixed at a predetermined distance from each other.

9. Filtration device according to any one of the preceding claims, comprising between 2 and 50, preferably between 2 and 20, and advantageously between 3 and 8 planar membrane assemblies (2).

10. Filtration device according to any one of the preceding claims; wherein the capillary membranes (5) have an outer diameter between 0,4 and 5 mm.

## Patentansprüche

1. Filtrationsvorrichtung (1) zum Entfernen von Teilchen aus einer Flüssigkeit, wobei die Filtrationsvorrichtung das Folgende umfasst:
- einen Auffangkopf (3), welcher dafür eingerichtet ist, Permeat aufzufangen und zu entfernen,
- mehrere planare Membranbaueinheiten (2), welche eine obere Seite (14) und eine untere Seite (13) aufweisen, wobei die besagte untere Seite operativ mit dem besagten Auffangkopf (3) verbunden ist, wobei die besagten planaren Membranbaueinheiten (2) jeweils aus einer einzigen Reihe aus mehreren Mikro- oder Ultrafiltrations-Kapillarmembranen (5) für einwärts gerichtete Strömung ausgebildet sind, und wobei sich jede Kapillarmembran von der unteren Seite (13) bis zu der oberen Seite (14) der planaren Membranbaueinheit (2) erstreckt,
**dadurch gekennzeichnet, dass** der besagte Auffangkopf (3) aus einer einzigen Auffangkammer (6) ausgebildet ist, und dass die Filtrationsvorrichtung (1) für jede planare Membranbaueinheit (2) einen einzelnen oberen Kopf (4) umfasst, wobei die oberen Seiten (14) der Kapillarmembranen der besagten planaren Membranbaueinheit mit dem besagten einzelnen oberen Kopf (4) verbunden sind, und wobei die oberen Köpfe (4) jeder planaren Membranbaueinheit (2) und die Anordnung der planaren Membranbaueinheiten an der unteren Seite so eingerichtet sind, dass ermöglicht wird, dass eine Strömung aus Luftblasen, Rohwasser und Teilchen von der unteren Seite zur oberen Seite gelangt.

2. Filtrationsvorrichtung nach Anspruch 1, wobei jeder obere Kopf (4) dafür eingerichtet ist, Permeat aufzufangen und zu entfernen.

3. Filtrationsvorrichtung nach Anspruch 1, wobei die Kapillarmembranen (5) an der oberen Seite (14) der planaren Membranbaueinheit geschlossen sind.

4. Filtrationsvorrichtung nach Anspruch 1, 2 oder 3, welche eine Luftzufuhr (10, 11) umfasst, die dafür eingerichtet ist, Luftblasen zwischen den planaren Membranbaueinheiten (2) bereitzustellen.

5. Filtrationsvorrichtung nach Anspruch 4, wobei die Luftzufuhr (10, 11) über die vollständige Länge der planaren Membranbaueinheiten (2) angeordnet ist.

6. Filtrationsvorrichtung nach Anspruch 4 oder 5, wobei die Luftzufuhr (10, 11) mit den Auffangkopf (3) integriert ist oder unmittelbar oberhalb desselben angeordnet ist.

7. Filtrationsvorrichtung nach Anspruch 4, 5 oder 6, wobei zwischen allen planaren Membranbaueinheiten (2) eine Luftzufuhr (10, 11) bereitgestellt ist.

8. Filtrationsvorrichtung nach einem der vorhergehenden Ansprüche, wobei die oberen Köpfe (4) jeder Membranbaueinheit (2) mit einem vorgegebenen Abstand voneinander befestigt sind.

9. Filtrationsvorrichtung nach einem der vorhergehenden Ansprüche, welche 2 bis 50, vorzugsweise 2 bis 20 und vorteilhafter Weise 3 bis 8 planare Membranbaueinheiten (2) umfasst.

10. Filtrationsvorrichtung nach einem der vorhergehenden Ansprüche, wobei die Kapillarmembranen (5) einen äußeren Durchmesser von 0,4 bis 5 mm aufweisen.

## Revendications

1. Dispositif de filtration (1) pour retirer des particules d'un liquide, ledit dispositif de filtration comprenant :
- une tête de collecteur (3) disposée de façon à collecter et retirer le filtrat,
- une pluralité d'ensembles plans de membranes (2) ayant un côté supérieur (14) et un côté inférieur (13), ledit côté inférieur étant relié de manière opérationnelle à ladite tête de collecteur (3), lesdits ensembles plans de membranes (2) étant chacun formés d'une rangée unique d'une pluralité de membranes capillaires de micro- ou d'ultrafiltration centripète (5), chaque membrane capillaire s'étendant dudit côté inférieur (13) audit côté supérieur (14) dudit ensemble plan de membranes (2),
**caractérisé en ce que** ladite tête de collecteur (3) est formée d'une seule chambre de collecte (6) et **en ce que** le dispositif de filtration (1) comprend une tête supérieure individuelle (4) pour chaque ensemble plan de membranes (2), dans lequel les côtés supérieurs (14) des membranes capillaires dudit ensemble plan de membranes sont reliés à ladite tête supérieure individuelle (4), et dans lequel les têtes supérieures (4) de chaque ensemble plan de membranes (2) et la disposition des ensembles plans de membranes au niveau du côté inférieur, sont agencées pour permettre à un écoulement de bulles d'air, d'eau brute et de particules de passer dudit côté inférieur audit côté supérieur.

2. Dispositif de filtration selon la revendication 1, dans lequel chaque tête supérieure (4) est disposée de façon à collecter et retirer le filtrat.

3. Dispositif de filtration selon la revendication 1, dans lequel les membranes capillaires (5) sont fermées au niveau du côté supérieur (14) de l'ensemble plan de membranes.

4. Dispositif de filtration selon la revendication 1, 2 ou 3 comprenant une alimentation d'air (10, 11) disposée de façon à amener des bulles d'air entre les ensembles plans de membranes (2).

5. Dispositif de filtration selon la revendication 4, dans lequel l'alimentation d'air (10, 11) est disposée sur toute la longueur des ensembles plans de membranes (2).

6. Dispositif de filtration selon la revendication 4 ou 5, dans lequel ladite alimentation d'air (10, 11) est intégrée avec ou placée juste au-dessus de la tête de collecteur (3).

7. Dispositif de filtration selon la revendication 4, 5 ou 6, dans lequel une alimentation d'air (10, 11) est prévue entre tous les ensembles plans de membranes (2).

8. Dispositif de filtration selon l'une quelconque des revendications précédentes, dans lequel les colonnes supérieures (4) de chaque ensemble plan de membranes (2) sont fixées à une distance prédéterminée l'une de l'autre.

9. Dispositif de filtration selon l'une quelconque des revendications précédentes, comprenant entre 2 et 50, de préférence entre 2 et 20, et de manière avantageuse entre 3 et 8 ensembles plans de membranes (2).

10. Dispositif de filtration selon l'une quelconque des revendications précédentes, dans lequel les membranes capillaires (5) ont un diamètre externe compris entre 0,4 et 5 mm.
